# EUROPÄISCHE PATENTSCHRIFT

(11) **EP 0 476 555 B1**
(45) Veröffentlichungstag und Bekanntmachung des Hinweises auf die Patenterteilung: **09.12.1998**
(21) Anmeldenummer: 91115631.3
(22) Anmeldetag: 14.09.1991
(51) Int. Cl.: A01N 25/30

(54) **Synergistische herbizide Mittel**
Synergistic herbicidal agents
Agents herbicides synergiques

(30) Priorität: 15.09.1990 DE 4029304
(43) Veröffentlichungstag der Anmeldung: 25.03.1992
(60) Teilanmeldung: 98103590.0
(73) Patentinhaber: Hoechst Schering AgrEvo GmbH, 13342 Berlin (DE)
(72) Erfinder: Bieringer, Hermann, Dr., W-6239 Eppstein/Taunus (DE); Hacker, Erwin, Dr., W-6203 Hochheim am Main (DE); Heinrich, Rudolf, Dr., W-6233 Kelkheim/Taunus (DE); Hufe, Hans-Philipp, Dr., W-6239 Eppstein/Taunus (DE); Kocur, Jean, Dr., W-6238 Hofheim am Taunus (DE)
(74) Vertreter: Luderschmidt, Schüler & Partner GbR

(56) Entgegenhaltungen:
- EP-A- 48 436
- EP-A- 255 760
- EP-A- 336 151
- EP-A- 356 812
- EP-A- 402 770
- EP-A- 407 874
- WO-A-91/07089
- CHEMICAL PATENTS INDEX, BASIC ABSTRACTS JOURNAL Section Ch, Week 8705, Derwent Publications Ltd., London, GB; Class C01, AN 87-032875 & JP-A-61 289 004 (KAO CORP)

## Beschreibung

Die Erfindung betrifft das technische Gebiet der Pflanzenschutzmittel, insbesondere Wirkstoff-Tensid-Kombinationen, die über die grünen Pflanzenteile aufgenommen werden.

Es ist allgemein bekannt, daß manche Herbizide sowohl über Blätter als auch über Wurzeln in die Pflanzen gelangen und andere Herbizide selektiv praktisch nur über die Wurzeln oder nur über die Blätter aufgenommen werden. Die herbizide Wirksamkeit kann somit entscheidend davon abhängen, daß die Wirkstoffe rasch und möglichst vollständig durch das Blattgewebe in die Pflanzen eindringen können. Hierbei spielen oberflächenaktive Substanzen eine besondere Rolle, denn sie können im Einzelfall die Benetzbarkeit erhöhen und als eine Art Gleitschiene wirken, auf der die Wirkstoffe in die Blätter penetrieren.

Es wurde nun gefunden, daß bei gemeinsamer Applikation von bestimmten Herbiziden mit Tensiden des Typs der Alkylpolyglykolethersulfate und deren Salzen, die Wirksamkeit der Herbizide überraschend stark erhöht wird.

Gegenstand der Erfindung ist die Verwendung von Tensiden aus der Gruppe der C₁₀-C₁₈-Alkylpolyglykolethersulfate und deren physiologisch verträglichen Salze als Wirkungsverstärker für blattwirksame selektive Sulfonylharnstoff-Herbizide.

Die erfindungsgemäß zu verwendenden Tenside werden in der Regel zusammen mit dem bzw. den Herbiziden oder unmittelbar hintereinander auf die Pflanzen aufgebracht, vorzugsweise in Form einer wäßrigen Spritzbrühe, welche die Tenside und die Herbizide in wirksamen Mengen und gegebenenfalls weitere übliche Hilfsmittel enthält.

Die Konzentration der erfindungsgemäß zu verwendenden Tenside ist in einer wäßrigen Spritzbrühe in der Regel von 0,05 bis 2 Gew.-%, vorzugsweise 0,1 bis 1,0 Gew.-%, insbesondere 0,1 bis 0,3 Gew.-% Tensid, bezogen auf waschaktive Substanz, wobei dabei eine Wasseraufwandmenge von 200 bis 600 l/ha, insbesondere 300 bis 400 l/ha bevorzugt ist.

Als erfindungsgemäß einsetzbare Herbizide sind beispielsweise folgende blattwirksamen selektiven Sulfonylharnstoff-Herbizide geeignet:
C) Sulfonylharnstoffherbizide, z.B.
1-(2-Chlorphenylsulfonyl)-3-(4-methoxy-6-methyl-1,3,5-triazin-2-yl)-harnstoff (Chlorsulfuron),
1-[(2-Methoxycarbonyl-phenyl)sulfonyl]-3-(4-methoxy-6-methyl-1,3,5-triazinyl-2-yl)-harnstoff (Metsulfuron-methyl),
1-[(2-Methoxycarbonylphenyl)-sulfonyl]-3-methyl-3-(4-methoxy-6-methyl-1,3,5-triazin-2-yl)-harnstoff (DPX-L5300),
1-[(2-Methoxycarbonyl-phenyl-methyl)sulfonyl]-3-(4,6-dimethoxy-pyrimid-2-yl)-harnstoff (Bensulfuron-methyl),
1-[(2-Methoxycarbonyl-phenyl)-sulfonyl]-3-(dimethyl-pyrimid-2-yl)-harnstoff (Sulfometuron-methyl),
1-[(2-Methoxycarbonyl-thienyl)sulfonyl]-3-(4-methoxy-6-methyl-1,3,5-triazin-2-yl)-harnstoff (Thiameturon-methyl),
1-[(2-Ethoxycarbonyl-phenyl)-sulfonyl]-3-(4-chlor-6-methoxy-pyrimid-2-yl)-harnstoff (Chlorimuron-ethyl),
1-[(3-(N,N-Dimethylaminocarbonyl)-pyrid-2-yl)-sulfonyl]-3-(4,6-dimethoxy-pyrimid-2-yl)-harnstoff (Nicosulfuron, SL 950),
1-[3-(Ethylsulfonyl)-pyrid-2-yl)-sulfonyl]-3-(4,6-dimethoxy-pyrimid-2-yl)-harnstoff (DPX-E9636)
1-[(2-(2-Chlorethyl)-phenyl)-sulfonyl]-3-(4-methoxy-6-methyl-1,3,5-triazin-2-yl)-harnstoff (Triasulfuron),
1-[(2-Methoxycarbonyl-phenyl)-sulfonyl]-3-(4,6-bis-(difluormethoxy)-pyrimid-2-yl)-harnstoff (Pirimisulfuron),
1-[(4-Ethoxycarbonyl-1-methyl-1,2-imidazol-5-yl)-sulfonyl]-3-(4,6-dimethoxy-pyrimid-2-yl)-harnstoff (Pyrazosulfuron-methyl),
1-[(2-Methoxycarbonyl-phenyl)-sulfonyl]-3-(4-ethoxy-6-methylamino-1,3,5-triazin-2-yl)-harnstoff (DPX-A7881), Cinosulfuron (CGA 142 464),
1-[(3-Trifluorethyl-pyrid-2-yl)sulfonyl]-3-(4,6-dimethoxy-pyrimid-2-yl)-harnstoff (Flazasulfuron, SL 160),
1-[(N-Methyl-N-methylsulfonyl-amino)-sulfonyl]-3-(4,6-dimethoxy-pyrimid-2-yl)-harnstoff (Amidosulfuron, Hoe 75032),
1-[(N-Ethylsulfonyl-N-methyl-amino)-sulfonyl]-3-(4,6-dimethoxy-pyrimid-2-yl)-harnstoff (SH-1),
1-[(N-Ethyl-N-ethylsulfonyl-amino)-sulfonyl]-3-(4,6-dimethoxy-pyrimid-2-yl)-harnstoff (SH-2),
1-[(2-Ethoxyphenoxy)-sulfonyl]-3-(4,6-dimethoxy-pyrimid-2-yl)-harnstoff (SH-3),
1-[(N-(Dimethylaminosulfonyl)-N-methyl-amino)-sulfonyl]-3-(4,6-dimethoxy-pyrimid-2-yl)-harnstoff (SH-4).

Neben den genannten selektiven Herbiziden sind auch deren angereicherte oder reine optische Formen, falls diese existieren und herbizid wirksam sind, sowie Herbizide analoger Struktur einsetzbar.

Die erfindungsgemäß einsetzbaren Herbizide sind allgemein bekannt. Zum großen Teil sind Sie in "The Pesticide Mannual", 8th Edition, British Crop Protection Council 1987 und in "Farm Chemicals Handbook '90", Meister Publishing Company, Willoughby, Ohio USA 1990 und dort zitierter Literatur beschrieben.

Einige der bevorzugten Herbizide sowie in den vorstehenden Literaturstellen nicht beschriebenen Herbizide sind im folgenden aufgeführt:

Amidosulfuron, d.h. 3-(4,6-Dimethoxypyrimidin-2-yl)-1-(N-methyl-N-(methylsulfony)-aminosulfonyl)-harnstoff, ist ein herbizider Wirkstoff zur Bekämpfung von breitblättrigen Unkräutern in Getreide (vgl. Z. Pfl. Krankh. Pfl. Schutz, Sonderheft XII, 489-497 (1990) und EP-A-0 131 258). SH-1 und SH-2 sind Stukturanaloge zu Amidosulfuron (S. EP-A-0 131 258).

Aus der EP-A-0342569 sind herbizide 1-(2-Alkoxyphenoxysulfonyl)-3-(pyrimid-2-yl)-harnstoffe bekannt, die sich besonders zur Bekämpfung von dikotylen Unkräutern in Getreide eignen und als erfindungsgemäße Herbizide einsetzbar sind. Besonders hervorzuheben ist daraus die Verbindung 3-(4,6-Dimethoxypyrimidin-2-yl)-1-(2-ethoxy-phenoxysulfonyl)-harnstoff (SH-3).

Aus EP-A-0 347 788 sind Sulfonylharnstoffe zur Bekämpfung von mono- und dikotylen Schadpflanzen in Nutzpflanzenkulturen bekannt. SH-4 ist ein Beispiel für derartige Herbizide.

Pirimisulfuron (CGA 136 872) ist aus Brighton Crop. Prot. Conf.-Weeds - 1987, S. 41-48 bekannt.
DPX-A 7881 ist aus British Crop Prof. Conf.-Weeds - 1987, S. 63 ff bekannt.
Cinosulfuron ist aus "Agricultural Chemicals Book II, Herbicides", Thomson Publications, 1989-90, USA bekannt.
Flazasulfuron ist aus Y. Psujii et. al., Abstr. Pap. Am. Chem. Soc. 195 MEET. AGRO. 10, 1988 bekannt.
Nicosulfuron (SL-950), d.h. 3-(4,6-Dimethoxypyrimidin-2-yl)-1-(3-dimethylaminocarbonyl-pyridin-2-yl-sulfonyl)-harnstoff, ist ein Sulfonylharnstoff-Herbizid, das zur Bekämpfung von Gräsern und breitblättrigen Unkräutern in Mais eingesetzt wird (siehe F. Kimura et al., Brighton Crop. Protection Conference-Weeds-1989, Seiten 29-34).
DPX-E 9636 ist aus Brighton Crop. Conf.-Weeds - 1989, S. 23 ff bekannt.

Als Herbizide werden vorzugsweise Amidosulfuron, 1-(2-Alkoxyphenoxysulfonyl)-3-pyrimid-2-yl-harnstoff-Herbizide, Nicosulfuron, DPX-E9636, Pirimisulfuron, Hoe 95404, Metsulfuron-methyl, N-Methyl-metsulfuron-methyl, (DPX-L5300), Thiameturon-methyl und Triasulfuron ausgewählt.

Die oberflächenaktiven Substanzen vom Typ der C₁₀-C₁₈-Alkylpolyglykolethersulfate werden vorzugsweise in Form ihrer Alkalisalze, wie Natrium- oder Kaliumsalze, und/oder Ammoniumsalze, aber auch als Magnesiumsalze verwendet, wobei vorzugsweise 2 bis 5 Ethylenoxyeinheiten im Polyglykolteil enthalten sind. Besonders bevorzugt ist z.B. C₁₂/C₁₄-Fettalkoholdiglykolethersulfat-Natrium (Handelsname ®Genapol LRO, Hoechst AG); diese Substanz wird im folgenden Netzmittel A genannt.

Das Gewichtsverhältnis von Herbizid zu Tensid kann in einem weiten Bereich variieren und hängt von der Wirksamkeit des Herbizids sowie der Konzentration in der Spritzbrühe ab. In der Regel ist es im Bereich von 10:1 bis 1:200, vorzugsweise 4:1 bis 1:100.

Es ist bereits bekannt, Netzmittel vom Typ der C₁₂/C₁₄-Fettalkoholdiglykolethersulfate zur Wirkungsverstärkung von Glufosinate einzusetzen; vgl. EP-A-048436 (US-A-4,400,196), EP-A-336151 sowie Proc. EWRS Symp. Factors Affecting Herbicidal Activity and Selectivity, 227-232, 1988).

Es wurde in der nicht vorveröffentlichten Europäischen Patentanmeldung Nr. 90 112 739.9 bereits vorgeschlagen, wäßrige Zubereitungen von Herbiziden aus der Gruppe Glufosinate, Fenoxaprop-P-ethyl, Isoproturon und Diclofopmethyl mit Alkylpolyglykolethersulfat-Na (®Genapol LRO, Hoechst AG) und mit Entschäumern aus der Gruppe der Perfluor-(C₆-C₈)-alkylphosphinsäuren und/oder -phosphonsäuren herzustellen. Speziell wurde als Entschäumer ein Salz aus einem Talgfettaminethoxylat mit 15 EO, d.h. 15 Ethylenoxyeinheiten, (®Genamin T 150, Hoechst AG) und einem Entschäumer des genannten Typs, ®Fluowett PP, Hoechst AG verwendet.

Gemäß Anspruch 1 offenbart diese Europäische Patentanmeldung wäßrige Zubereitungen von Herbiziden, welche in Kombination mit einem Sulfatgruppenhaltigen Tensid (Netzmittel) ein Tensid (Entschäumer) aus der Gruppe der Perfluor-(C₆-C₁₈)alkylphosphinsäuren und/oder Perfluor-(C₆-C₁₈)alkylphosphonsäuren und/oder deren Salze enthalten.

In der Deutschen Patentanmeldung P 39 38 564.7 wurde bereits vorgeschlagen, ein wasserdispergierbares Granulat von Fenoxaprop-ethyl oder Fenoxaprop-P-ethyl herzustellen, das die 2- bis 4-fache Menge, bezogen auf Herbizid, Genapol LRO als Netzmittel sowie einen Entschäumer auf Silikonbasis, ein Dispergiermittel auf Basis eines Kresol-Formaldehyd-Kondensationsprodukts und ein Aluminiumsilikat enthält.

Gegenstand der Erfindung sind somit auch herbizide Mittel mit einem Gehalt an
a) Herbiziden aus der Gruppe der blattwirksamen selektiven Sulfonylharnstoff-Herbizide und
b) Tensiden aus der Gruppe der C₁₀-C₁₈-Alkylpolyglykolethersulfate und deren physiologisch verträglichen Salzen, ausgenommen wäßrige Zubereitungen von Herbiziden, welche in Kombination mit einem sulfatgruppenhaltigen Tensid (Netzmittel) ein Tensid (Entschäumer) aus der Gruppe der Perfluor-(C₆-C₁₈)alkylphosphinsäuren und/oder Perfluor-(C₆-C₁₈)alkylphosphonsäuren und/oder deren Salze enthalten.

Die erfindungsgemäßen herbiziden Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser-in-Öl-Emulsionen, versprühbare Lösungen oder Emulsionen, Suspensionskonzentrate (SC), Dispersionen auf Öl- oder Wasserbasis, ölmischbare Lösungen (OL) Suspoemulsionen, Kapselsuspensionen (CS), Stäubemittel (DP), Beizmittel, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 2nd Ed. 1972-73; K. Martens, "Spray Drying Handbook, 3rd Ed. 1979, G. Goodwin Ltd. London.

Die notwendigen zusätzlichen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y.; Marsden, "Solvents Guide", 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Für weitere Informationen zur Formulierung von Pflanzenschutzmitteln siehe z.B. G.C. Klingmann, "Weed Control as a Science", John Wiley and Sons, Inc., New York, 1961, Seiten 81-96 und J.D. Freyer, s.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gewichtsprozent, insbesondere 0,1 bis 95 Gew.-%, Herbizid-Wirkstoff.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 80 Gew.-% betragen. Staubförmige Formulierungen enthalten meistens 1 bis 20 Gew.-% an Wirkstoff, versprühbare Lösungen etwa 0,2 bis 20 Gew.-%. Bei Granulaten hängt der Wirkstoffgehalt zum Teil davon ab, ob die wirksame Verbindung flüssig oder fest vorliegt. Meist liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Vorzugsweise enthalten die herbiziden Mittel neben den erfindungsgemäßen Bestandteilen a) und b) noch Wasser und gegebenenfalls organische Lösungsmittel und werden in Form einer wäßrigen konzentrierten Dispersion oder Emulsion formuliert oder als Tankmix in Form einer verdünnten Dispersion, Emulsion oder Lösung mit einem Verdünnungsgrad bis zu dem der gebrauchsfertigen Spritzbrühe hergestellt. In konzentrierten wäßrigen Dispersionen oder Emulsionen ist das Gew.-Verhältnis von Herbizid a) zu Tensid b) vorzugsweise von 1:1,5 bis 1:4.

Auch Mischungen oder Mischformulierungen mit anderen Wirkstoffen, wie z.B. Insektiziden, Akariziden, Herbiziden, Safenern, Düngemitteln, Wachstumsregulatoren oder Fungiziden sind gegebenenfalls möglich. Besonders bevorzugt ist eine als Tankmix hergestelltes herbizides Mittel, das zur Anwendung bevorzugte Mengen an Herbizid und Tensid enthält.

Zur Anwendung werden in handelsüblicher Form vorliegende konzentrierte Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Sprüh- und Adsorptionsgranulate, versprühbare Lösungen sowie als Tankmix hergestellte Spritzbrühen werden vor der Anwendung üblicherweise nicht mehr mit weiteren inerten Stoffen verdünnt. Allerdings kann es vorteilhaft oder notwendig sein, den Spritzbrühen weitere Mengen an erfindungsgemäßen Tensiden b) und/oder andere übliche Hilfsmittel, insbesondere selbstemulgiernede Öle oder Paraffinöle zuzugeben. Denn bei einigen der konzentrierten Formulierungen ist der Anteil an erfindungsgemäßen Tensiden nicht beliebig zu erhöhen, ohne die Stabilität der Formulierung zu beeinträchtigen.

Mit den äußeren Bedingungen wie Temperatur, Feuchtigkeit, der Art des verwendeten Herbizids, u.a. variiert die erforderliche Aufwandmenge der Wirkstoffe. Sie kann innerhalb weiter Grenzen schwanken, z.B. zwischen 0,001 und 10,0 kg/ha oder mehr Aktivsubstanz, vorzugsweise liegt sie jedoch zwischen 0,005 und 5 kg/ha.

Die auffallende Wirkungsverbesserung durch die erfindungsgemäß eingesetzten Tenside, wie z.B. Netzmittel A geht weit über das hinaus, was beispielsweise andere herkömmliche Netzmittel leisten und kann deshalb als in besonderem Maße synergistisch wirkungsverstärkend bezeichnet werden. Dies umsomehr, als die erfindungsgemäßen Tenside für sich allein keine eigentliche herbizide Wirksamkeit haben und die Pflanzen kaum äußerlich sichtbar schädigen - gelegentlich kommt es auf der Blattspreite junger Pflanzen zu leichten Braunverfärbungen (sogenannten "Berostungen"), die sich jedoch sehr rasch innerhalb weniger Tage wieder verwachsen und dann nicht mehr zu sehen sind.

Einige empfindliche junge Unkräuter erleiden durch Netzmittel A allein einen leichten Wachstumsschock, d.h. sie bleiben über 1-2 Wochen im Wachstum gegenüber Kontrollpflanzen zurück, in der folgenden Zeit erholen sich die Pflanzen jedoch wieder und wachsen gesund weiter.

Bei gemeinsamer Ausbringung mit den herbiziden Wirkstoffen bewirken die erfindungsgemäßen Tenside jedoch eine ungewöhnlich starke Verbesserung der Wirkung, indem die Wirkstoffe nicht nur schneller, sondern auch vollständiger aufgenommen werden und ihre herbizide Effektivität wesentlich besser entfalten können.

Darüberhinaus wird die Wirksamkeit der applizierten Herbizide wesentlich weniger durch Wettereinflüsse, wie z.B. Regen, beeinträchtigt.

Gegenstand der Erfindung ist deshalb auch ein Verfahren zur Bekämpfung von Schadpflanzen, vorzugsweise zur selektiven Bekämpfung von Schadpflanzen in Nutzpflanzenkulturen, dadurch gekennzeichnet, daß man eine herbizid wirksame Menge der genannten Herbizide a) in Kombination mit mindestens einem der genannten Tenside b) auf die Pflanzen oder deren Anbaufläche appliziert.

Als Schadpflanzen sind bevorzugt die von den jeweiligen Herbiziden schon ohne Tensidzusatz zu bekämpfenden Schadpflanzen gemeint.

Der Anteil am Tensid b) in konzentrierten Formulierungen kann naturgemäß nicht beliebig erhöht werden, ohne die Stabilität der Formulierung nicht zu beeinträchtigen. Das Gewichtsverhältnis Herbizid:Tensid ist in den konzentrierten Formulierungen vorzugsweise von 10:1 bis 1:20.

Das Gewichtsverhältnis Herbizid:Tensid ist bei der Applikation vorzugsweise im Bereich 10:1 bis 1:200, insbesondere 4:1 bis 1:100 in Abhängigkeit von der Wirksamkeit des jeweiligen Herbizids. Die Konzentration an erfindungsgemäßen Tensid b) ist vorzugsweise bei 0,05 bis 2 Gew.-%, vorzugsweise 0,1 bis 1,0 Gew.-%, insbesondere 0,1 bis 0,3 Gew.-% waschaktiver Substanz in der Spritzbrühe bei einer Wasseraufwandmenge von 200 bis 600 l/ha. Die Dosis ist insbesondere bevorzugt von 300 bis 900 g waschaktiver Substanz des Tensids pro ha Anbaufläche.

### A) Biologisches Beispiele

Verschiedene wirtschaftlich wichtige Ungräser wurden in Töpfen von 13 cm Durchmesser in sandiger Lehmerde im Gewächshaus angezogen und nach Erreichen von Größe und Wachstumsstadien, wie sie in Tabelle 1 angegeben sind, mit dem Herbizid allein und in Kombination mit Netzmittel A behandelt. Dabei wurde die mit Wasser zur Spritzbrühe verdünnte Formulierung (s.u.) des Herbizids bzw. des Tankmixes aus Herbizid-Formulierung, Netzmittel und Wasser mit einer Wasseraufwandmenge von 300 l/ha ausgebracht.

**Tabelle 1**

| Anzuchtbedingungen und Wachstumsstadien der Versuchspflanzen | | | |
|---|---|---|---|
| Pflanzenart | Gewächshaustemperatur tags/nachts | Größe (cm) | Wuchsstadium |
| Alopecurus myosuroides (ALOMY) | 20/14°C | 23-25 | Mitte Bestockung |
| Avena fatua (AVEFA) | 20/14°C | 31-33 | Anfang Schossen |
| Sorghum halepense (SORHA) | 24/18°C | 18-32 | 6-Blatt-Stadium |

4 Wochen nach Applikation der Herbizide wurden die behandelten Pflanzen, die im Gewächshaus unter jeweils gleichen Temperaturbedingungen weiterkultiviert wurden, visuell bonitiert, indem die prozentuale Schädigung des pflanzlichen Wachstums festgestellt wurde.

### Beispiel A3

Wie allgemein beschrieben, wurde die Wirkungssteigerung von Nicosulfuron (SL-950) durch Netzmittel A getestet. Die Ergebnisse sind in Tabelle 4 zusammengefaßt:

**Tabelle 4**

| Herbizide Wirkung von SL-950 (Nicosulfuron) bei Zusatz von ®Genapol LRO (Netzmittel) | | | | |
|---|---|---|---|---|
| Wirkstoff/Tensid | Dosis g AS/ha | % Herbizide Wirksamkeit gegen | | |
| | | AVEFA | STEME | MATCH |
| Nicosulfuron (als WG 75) | 10 | 0 | 0 | 0 |
| | 20 | 23 | 65 | 63 |
| | 40 | 58 | 75 | 73 |
| | 60 | 60 | 80 | 83 |
| Nicosulfuron WG 75 + Netzmittel | 10+600 | 75 | 85 | 85 |
| | 20+600 | 90 | 98 | 95 |
| | 40+600 | 93 | 100 | 98 |
| | 60+600 | 97 | 100 | 100 |
| Nicosulfuron (als SC 04) | 10 | 35 | 70 | 65 |
| | 20 | 63 | 90 | 80 |
| | 40 | 78 | 100 | 95 |
| | 60 | 94 | 100 | 97 |
| Nicosulfuron-SC 04 + Netzmittel | 10+600 | 70 | 98 | 85 |
| | 20+600 | 90 | 100 | 100 |
| | 40+600 | 95 | 100 | 100 |
| | 60+600 | 100 | 100 | 100 |
| Abkürzungen: AVEFA = Avena fatua STEME = Stellaria media MATCH = Matricaria chamomilla Nicosulfuron WG 75 = Nicosulfuron als 75 %iges Granulat Nicosulfuron SC 04 = Nicosulfuron als 4 %iges Suspensionskonzentrat Netzmittel = Netzmittel A =C₁₂/C₁₄-Fettalkoholdiglykolethersulfat-Na (®Genapol LRO, 28%ige wäßrige Lösung). | | | | |

### Beispiel A5

Wie allgemein angegeben wurde der Sulfonylharnstoff DPX-E9636 in Kombination mit Netzmittel A auf dikotyle Unkräuter im Stadium 24 appliziert und 5 Wochen nach Behandlung bonitiert (siehe Tabelle 6):

**Tabelle 6**

| Wirkungssteigerung von DPX-9636 | | | |
|---|---|---|---|
| Mittel | Dosis g AS/ha | Wirkung [%] gegen | |
| | | ABUTH | SEBEX |
| DPX-E9636 (WP 20) | 6,25 | 0 | 7 |
| | 12,5 | 0 | 17 |
| | 25,0 | 0 | 33 |
| DPX-E 9636 + Netzmittel A | 6,25 + 280 | 7 | 70 |
| | 12,25 + 280 | 37 | 82 |
| | 25,0 + 28 | 60 | 89 |
| Abkürzungen: DPX-E9636 WP 20 = Wirkstoff als 20 %iges wasserdispergierbares Pulver Netzmittel A = ®Genapol LRO, die Konzentration betrug in der Spritsbrühe 1 Gew.-% waschaktiver Substanz ABUTH = Abutylon theophrasti SEBEX = Sesbania exaltata | | | |

### Beispiel A6

Analog zu Beispielen A3 und A5 wurde die Wirkungssteigerung von Pirimisulfuron durch Netzmittel A bei dikotylen Unkräutern, jedoch im Feldversuch, getestet. Die Wasseraufwandmenge betrug 300 l/ha.

### Ergebnisse (s. Tabelle 7)

**Tabelle 7**

| Wirkungssteigerung von Pirimisulfuron | | | | |
|---|---|---|---|---|
| Mittel | Dosis g AS/ha | Wirkung in %, 28 Tage nach Behandlung | | |
| | | ABUTH | SEBEX | SIDSP |
| Pirimisulfuron (WG 75) | 20 | 0 | 0 | 0 |
| | 40 | 33 | 10 | 7 |
| Pirimisulfuron + Netzmittel A | 20+280 | 90 | 95 | 70 |
| | 40+280 | 93 | 97 | 88 |
| Abkürzungen: WG 75 = wasserdispergierbares Granulat mit 75 % Wirkstoffgehalt ABUTH = Abutylon theophrasti SEBEX = Sesbonia exaltata SIDSP = Sida spinosa | | | | |

### Beispiel A7

Analog zu Beispiel A6 wurden Versuche mit den Sulfonylharnstoffen (WP 20) und SH-3 (WP 20) als Herbizid und Galium aparine als Schadpflanze durchgeführt (s. Tabelle 8):

**Tabelle 8**

| Mittel | Dosis [g AS/ha] | Wirkung gegen Galium aparine |
|---|---|---|
| Amidosulfuron | 15 | 95 |
| | 30 | 97 |
| Amidosulfuron + Netzmittel A | 15 + 280 | 97 |
| SH-3 | 15 | 88 |
| | 30 | 97 |
| SH-3 + Netzmittel A | 15 + 280 | 97 |

### Beispiel A8

Wie allgemein beschrieben wurden die in Tabelle 9 angegebenen Sulfonylharnstoffe gegen Chenopodium album (CHEAL) und Galium aparine (GALAP) getestet:

**Tabelle 9**

| Mittel | Dosis [g AS/ha] | CHEAL | GALAP |
|---|---|---|---|
| Metsulfuron-methyl (DF 20) | 4 | 27 | 68 |
| Metsulfuron-methyl + Netzmittel A | 4 + 250 | 100 | 80 |
| Thiameturon-methyl (DF 75) | 40 | 85 | 88 |
| Thiameturon-methyl + Netzmittel A | 40 + 250 | 93 | 95 |
| N-Methyl-metsulfuron-methyl (DF 75) | 10 | 85 | 23 |
| N-Methyl-metsulfuron-methyl + Netzmittel | 10 + 250 | 100 | 65 |
| Triasulfuron | 10 | 63 | 90 |
| Triasulfuron + Netzmittel A | 10 + 250 | 90 | 98 |

## Patentansprüche

1. Verwendung von Tensiden aus der Gruppe der C₁₀-C₁₈-Alkylpolyglykolethersulfate und deren physiologisch verträglichen Salze als Wirkungsverstärker für blattwirksame selektive Sulfonylharnstoff-Herbizide.

2. Verwendung nach Anspruch 1, dadurch gekennzeichnet, daß eine wirksame Menge eines der Herbizide zusammen mit einem der Tenside auf Schadpflanzen oder die Anbaufläche appliziert und das Gewichtsverhältnis von Herbizid zu Tensid 10:1 bis 1:200 beträgt.

3. Verwendung nach Anspruch 1 oder 2, dadurch gekennzeichnet, daß Herbizid und Tensid gemeinsam in Form einer wäßrigen Spritzbrühe ausgebracht werden und die Konzentration an Tensid 0,05 bis 2 Gew.-%, bezogen auf die Spritzbrühe, beträgt.

4. Verwendung nach einem oder mehreren der Ansprüche 1 bis 3 als Wirkungsverstärker für Nicosulfuron, DPX-E9636, Pirimisulfuron, Amidosulfuron, SH-3, Metsulfuronmethyl, Thiameturon-methyl, N-Methylmetsulfuronmethyl oder Triasulfuron.

5. Herbizide Mittel mit einem Gehalt an
a) Herbiziden aus der Gruppe der blattwirksamen selektiven Sulfonylharnstoff-Herbizide und
b) Tensiden aus der Gruppe der C₁₀-C₁₈-Alkylpolyglykolethersulfate und deren physiologisch verträglichen Salzen, ausgenommen wäßrige Zubereitungen von Herbiziden, welche in Kombination mit einem sulfatgruppenhaltigen Tensid (Netzmittel) ein Tensid (Entschäumer) aus der Gruppe der Perfluor-(C₆-C₁₈)alkylphosphinsäuren und/oder Perfluor-(C₆-C₁₈)alkylphosphonsäuren und /oder deren Salze enthalten.

6. Mittel nach Anspruch 5, dadurch gekennzeichnet, daß das Gewichtsverhältnis von Herbizid zu Tensid 10:1 bis 1:200 ist.

7. Mittel nach Anspruch 5 oder 6, dadurch gekennzeichnet, daß die Konzentration an Tensid in einer wäßrigen Spritzbrühe 0,05 bis 2 Gew.-% waschaktive Substanz beträgt.

8. Verfahren zur Bekämpfung von Schadpflanzen, dadurch gekennzeichnet, daß man eine herbizid wirksame Menge einer der in Anspruch 5 definierten Kombination aus Herbizid und Tensid auf die Pflanzen oder die Anbaufläche appliziert.

9. Verfahren nach Anspruch 8, dadurch gekennzeichnet, daß das Gewichtsverhältnis von Herbizid zu Tensid 10:1 bis 1:200 beträgt.

10. Verfahren nach Anspruch 8 oder 9, dadurch gekennzeichnet, daß die Applikation mittels wäßriger Spritzbrühe erfolgt, in der die Konzentration an Tensid 0,05 bis 2 Gew.-% beträgt.

11. Verfahren nach einem oder mehreren der Ansprüche 8 bis 10, dadurch gekennzeichnet, daß die Dosis an Tensid 600 bis 900 g waschaktiver Substanz pro Hektar Anbaufläche beträgt.

12. Verfahren nach einem oder mehreren der Ansprüche 8 bis 11, dadurch gekennzeichnet, daß die Schadpflanzen selektiv in Nutzpflanzenkulturen bekämpft werden.

## Claims

1. The use of surfactants from the group consisting of the C₁₀-C₁₈-alkyl polyglycol ether sulfates and their physiologically acceptable salts as synergists for leaf-acting selective sulfonylurea herbicides.

2. The use as claimed in claim 1, which comprises applying, to harmful plants or the area under cultivation, an effective amount of one of the herbicides together with one of the surfactants, where the ratio by weight of herbicide to surfactant is 10:1 to 1:200.

3. The use as claimed in claim 1 or 2, which comprises applying herbicide and surfactant together in the form of an aqueous spray mixture, where the concentration of surfactant is 0.05 to 2 % by weight relative to the spray mixture.

4. The use as claimed in one or more of claims 1 to 3 as synergists for nicosulfuron, DPX-E9636, pirimisulfuron, amidosulfuron, SH-3, metsulfuronmethyl, thiameturon-methyl, N-methylmetsulfuronmethyl or triasulfuron.

5. A herbicidal agent which contains
a) herbicides from the group comprising the leaf-acting selective sulfonylurea herbicides and
b) surfactants from the group comprising the C₁₀-C₁₈-alkyl polyglycol ether sulfates and their physiologically acceptable salts, with the exception of aqueous preparations of herbicides which, in combination with a sulfate group-containing surfactant (wetting agent), contain a surfactant (defoamer) from the group consisting of the perfluoro-(C₆-C₁₈)alkylphosphinic acids and/or perfluoro-(C₆-C₁₈)alkylphosphonic acids and/or their salts.

6. An agent as claimed in claim 5, wherein the ratio by weight of herbicide to surfactant is 10:1 to 1:200.

7. An agent as claimed in claim 5 or 6, wherein the concentration of surfactant in an aqueous spray mixture is 0.05 to 2 % by weight of detergent.

8. A method of controlling harmful plants, which comprises applying, to the plants or the area under cultivation, a herbicidally effective amount of one of the combinations of herbicide and surfactant as defined in claim 5.

9. The method as claimed in claim 8, wherein the ratio by weight of herbicide to surfactant is 10:1 to 1:200.

10. The method as claimed in claim 8 or 9, wherein the application is carried out by means of an aqueous spray mixture in which the concentration of surfactant is 0.05 to 2 % by weight.

11. The method as claimed in one or more of claims 8 to 10, wherein the dosage rate of surfactant is 600 to 900 g of detergent per hectare of area under cultivation.

12. The method as claimed in one or more of claims 8 to 11, wherein the harmful plants are controlled selectively in crops of useful plants.

## Revendications

1. Utilisation de dérivés tensioactifs choisis parmi les (alkyle en C₁₀-C₁₈)-polyglycoléthersulfates et leurs sels physiologiquement acceptables comme renforçateurs d'activité pour des herbicides foliaires sélectifs sulfonylurée.

2. Utilisation selon la revendication 1, caractérisée en ce que, l'on applique sur des plantes nuisibles ou sur la terre arable une quantité efficace d'un des herbicides en même temps que l'un des dérivés tensioactifs, et en ce que le rapport en masse de l'herbicide par rapport au dérivé tensioactif est de 10:1 à 1:200.

3. Utilisation selon la revendication 1 ou 2, caractérisée en ce que, l'on applique l'herbicide et le dérivé tensioactif en même temps sous la forme d'une bouillie de pulvérisation, et en ce que la concentration en dérivé tensioactif est de 0,05 à 2% en poids, par rapport à la bouillie de pulvérisation.

4. Utilisation selon une ou plusieurs des revendications 1 à 3 comme renforçateur d'activité de nicosulfuron, DPX-E9636, pirimisulfuron, amidosulfuron, SH-3, metsulfuron-méthyl, thiaméturon-méthyl, N-méthyl-metsulfuron-méthyl ou triasulfuron.

5. Agents herbicides contenant
a) des herbicides choisis parmi les herbicides foliaires sélectifs sulfonylurée et
b) des dérivés tensioactifs choisis parmi les (alkyle en C₁₀-C₁₈)-polyglycoléthersulfates et leurs sels physiologiquement acceptables, à l'exception des préparations aqueuses d'herbicides, qui contiennent en combinaison avec un dérivé tensioactif contenant des groupes sulfates (agent mouillant), un tensioactif (agent antimoussant) choisi parmi les acides perfluoro-(alkyle en C₆-C₁₈)phosphiniques et/ou perfluoro-(alkyle en C₆-C₁₈)phosphoniques et/ou les sels de ceux-ci.

6. Agents selon la revendication 5, caractérisés en ce que le rapport en masse d'herbicide au dérivé tensioactif est 10:1 à 1:200.

7. Agents selon la revendication 5 ou 6, caractérisés en ce que la concentration en dérivé tensioactif dans une bouillie de pulvérisation aqueuse contient 0,05 à 2% en poids de substance détergente active.

8. Procédé pour combattre des plantes nuisibles, caractérisé en ce que l'on applique une quantité herbicide efficace d'une combinaison d'herbicide et de dérivé tensioactif définie à la revendication 5 sur les plantes ou la terre arable.

9. Procédé selon la revendication 8, caractérisé en ce que le rapport en masse d'herbicide au dérivé tensioactif est 10:1 à 1:200.

10. Procédé selon la revendication 8 ou 9, caractérisé en ce que, l'on réalise l'application au moyen d'une bouillie de pulvérisation aqueuse, dans laquelle la concentration en dérivé tensioactif est de 0,05 à 2% en poids.

11. Procédé selon une ou plusieurs des revendications 8 à 10, caractérisé en ce que la dose en dérivé tensioactif est de 600 à 900 g de substance détergente active par hectare de terre arable.

12. Procédé selon une ou plusieurs des revendications 8 à 11, caractérisé en ce les plantes nuisibles sont combattues de manière sélective dans des cultures de plantes utiles.
